(19) Europäisches Patentamt

European Patent Office

Office européen des brevets

(11) Veröffentlichungsnummer: **0 001 073**
**B1**

(12) **EUROPÄISCHE PATENTSCHRIFT**

(21) Anmeldenummer: **78100731.5**

(22) Anmeldetag: **23.08.78**

(51) Int. Cl.³: **B 23 D 41/08, B 21 C 1/30**

(54) **Ziehmaschine**

(30) Priorität: **03.09.77 DE 2739812**

(43) Veröffentlichungstag der Anmeldung:
**21.03.79 Patentblatt 79/06**

(45) Bekanntmachung des Hinweises auf die Patenterteilung:
**20.08.80 Patentblatt 80/17**

(84) Benannte Vertragsstaaten:
**BE CH FR GB SE**

(56) Entgegenhaltungen:
**FR - A - 2 309 299**
**US - A - 1 597 244**
**US - A - 2 841 025**
**US - A - 2 902 875**
**US - A - 3 046 846**

(73) Patentinhaber: **Oswald Forst Maschinenfabrik und Apparatebauanstalt GmbH**
**Schützenstrasse 160**
**D - 5650 Solingen 1 (DE)**

(72) Erfinder: **Holstein, Herbert**
**Mittelkatternberg 25**
**D - 5650 Solingen (DE)**

(74) Vertreter: **Rau, Manfred, Dr. Dipl.-Ing.**
**Postfach 91 04 80 Lange Zeile 30**
**D - 8500 Nürnberg 91 (DE)**

Courier Press, Leamington Spa, England.

Ziehmaschine

Die Erfindung betrifft eine Ziehmaschine zur Innenbearbeitung von Rohren, mit einem Maschinenbett und einem auf diesem angeordneten, mittels eines Antriebs in Längsrichtung zwischen einer Ausgangsstellung und einer Endstellungen verschiebbaren Ziehschlitten, der mit einer Zahnstange verbunden ist, in deren Verzahnung ein von einem Antriebsmotor antreibbares Antriebsritzel eingreift, wobei die Zahnstange gegenüber dem Maschinenbett in dessen Längsrichtung verschiebbar und senkrecht dazu allseitig über Führungsflächen gelagert ist, und wobei die Führungsflächen des Maschinenbetts sich im wesentlichen über die volle Länge zwischen der Ausgangsstellung und der Endstellung des Ziehschlittens erstrecken.

Aus der US—PS 3 046 846 ist eine derartige Ziehmaschine bekannt, bei der an der Unterseite eines sehr lang ausgebildeten Ziehschlittens eine Zahnstange angebracht ist, in die ein von einem Antriebsmotor antreibbares Zahnritzel eingreift. Dieses Antriebsritzel ist derart angeordnet, daß es sich während des gesamten Ziehvorganges unter dem Ziehschlitten befindet. Die Zahnstange ist über ihre volle Länge in gleichmäßigen Abständen am Ziehschlitten befestigt. Daraus folgt, daß die Zahnstange immer abwechselnd auf Zug oder Druck belastet wird. Da weiterhin die Zahnstange nur an der Unterseite des Schlittens angebracht ist, sind die Auswirkungen eines unvermeidbaren Seitenspiels nicht kompensiert.

Aus der US—PS 1 597 244 ist eine Senkrecht-Räummaschine bekannt, deren Räumschlitten an seiner Rückseite mit einer Zahnstange versehen ist, in deren Verzahnung ein Ritzel eingreift. Bei dieser Ausführung erstreckt sich die Zahnstange nur über die Länge des Räumschlittens.

Aus der US—PS 2 841 025 ist eine Waagerecht-Räummaschine bekannt, deren Räumschlitten eine sich über seine ganze Länge erstreckende Zahnstange aufweist, in deren Verzahnung ein entsprechendes Antriebsritzel eingreift. Die Zahnstange ist an der Rückseite des Räumschlittens angebracht und erstreckt sich wiederum nur über dessen Länge.

Aus der US—PS 2 902 875 ist eine Waagerecht-Räummaschine bekannt, deren Räumschlitten über seine volle Länge mit einer Zahnstange versehen ist, in die eine Antriebsritzel eingreift. Auch hierbei erstreckt sich die Zahnstange nur über die Länge des Räumschlittens.

Aus der FR—PS 2 309 299 ist eine Senkrecht-Räummaschine bekannt, deren Räumschlitten an seiner Rückseite mit einer sich über dessen Länge erstreckenden Zahnstange versehen ist, in die ein Antriebsritzel eingreift.

Ziehmaschinen der eingangs angegebenen Art werden insbesondere zur Bearbeitung sehr langer Rohre eingesetzt, d.h. der Hubweg des Ziehschlittens, der noch etwas länger sein muß als die Länge des zu bearbeitenden Rohres, kann länger als 10 m werden. Grundsätzlich mögliche hydraulische Antriebe oder Antriebe mittels Trapezgewindespindel oder mittels Kugelumlaufspindel sind dann ungeeignet. Bei einem hydraulischen Antrieb des Ziehschlittens treten zu große Schwingungen auf, die praktisch nicht gedämpft werden können. Der Einsatz von Trapezgewindespindeln kommt wegen ihres schlechten Wirkungsgrades nicht in Betracht. Kugelumlaufspindeln haben wegen der extrem hohen Zugkräfte in einem solchen Fall keine ausreichende Lebensdauer.

Der Erfindung liegt daher die Aufgabe zugrunde, eine Ziehmaschine der eingangs angegebenen Art so auszugestalten, daß auch bei sehr großen Hubwegen des Ziehschlittens konstruktions- und fertigungsbedingte Toleranzen kompensiert werden.

Diese Aufgabe wird erfindungsgemäß dadurch gelöst, daß die Führungsflächen für die Zahnstange an dieser selbst ausgebildet sind, daß die Zahnstange nur im Bereich ihres einen Endes mit dem Ziehschlitten verbunden ist, und daß das Antriebsritzel im Bereich der Ausgangsstellung des Ziehschlittens vor Beginn eines Ziehvorganges angeordnet ist, und daß während des gesamten Ziehvorganges die gesamte treibende Kraft vom Ritzel auf den Ziehschlitten nur durch Druckkräfte innerhalb der Zahnstange übertragen wird.

Durch die erfindungsgemäßen Maßnahmen ist sichergestellt, daß während eines gesamten Ziehvorganges die Zahnstange nur mit Druckkräften beaufschlagt wird. Dadurch werden Konstruktionsspiele in der Befestigung zwischen Ziehschlitten und Zahnstange vollständig kompensiert. Dadurch, daß die Zahnstange selber das unmittelbar geführte Teil bildet, ist sichergestellt, daß auch konstruktionsbedingtes Seitenspeil zwischen der Zahnstange einerseits und dem Schlitten andererseits nicht zum Tragen kommt. Wesentlich ist also, daß die Zahnstange nicht mittelbar, sondern unmittelbar geführt wird. Dem gleichen Ziel einer völlig spielfreien Führung und damit eines völlig spielfreien Antriebs des Ziehschlittens dient auch das Merkmal, wonach das Antriebsritzel im Bereich der Ausgangsstellung des Ziehschlittens vor Beginn eines Ziehvorganges angeordnet ist. Durch diese Maßnahme wird im Zusammenhang mit der Maßnahme, daß die Zahnstange nur im Bereich ihres einen Endes mit dem Ziehschlitten verbunden ist, eindeutig sichergestellt, daß die Zahnstange immer nur mit Druckkräften beaufschlagt wird. Außerdem wird durch die erfindungsgemäßen Maßnahmen der Ziehschlitten besonders kurz.

Wegen der großen Hublänge ist es praktisch unumgänglich, daß gemäß einer weiteren Ausgestaltung der Erfindung die Zahnstange aus miteinander verbundenen Einzelstücken besteht, deren einander benachbarte Stirnseiten sich vorteilhafterweise unter Freilassung einer schmalen Trennfuge über Zylinderstifte gegeneinander abstützen, die jeweils in zylindersegmentförmigen Teilbohrungen in den Stirnseiten der Einzelstücke angeordnet sind, wobei sich diese Teilbohrungen paarweise zu vollen zylinderförmigen Bohrungen ergänzen. Gerade wenn die Zahnstange aus Einzelstücken besteht, wirkt es sich besonders vorteilhat aus, daß die Zahnstange während des Ziehvorganges nur mit Druckkräften belastet wird, da hierbei ein eventuelles noch so geringes Spiel in den Verbindungslaschen der Einzelstücke nicht zum Tragen kommt und da diese Verbindungslaschen und entsprechende Verschraubungen nur schwach dimensioniert zu werden brauchen. Diese Verbindungen zwischen den Einzelstücken werden nur beim Rückhub des Ziehschlittens auf Zug beansprucht. Die Trennfugen verlaufen hierbei vorteilhafterweise parallel zu der Verzahnung der Zahnstange. Wenn gemäß einer vorteilhaften Weiterbildung der Erfindung die Verzahnung der Zahnstange und des Antriebsritzels jeweils als Schrägverzahnung ausgebildet ist, dann übertragen die Zylinderstifte nicht nur die reinen in Bewegungsrichtung der Zahnstange gerichteten Druckkräfte, sondern nehmen auch die aufgrund des schrägen Verlaufs der Trennfuge auftretenden Seitenkräfte auf.

Um eine besonders stabile Ausbildung und damit eine besonders sichere Führung der Zahnstange zu erreichen, ist es von Vorteil, wenn die Führungsflächen am Maschinenbett in einer zum Ziehschlitten hin offenen Führungsrinne ausgebildet sind, die zwischen den Endstellungen des Ziehschlittens von Führungsleisten teilweise überdeckt wird. Um in dem Bereich, wo vom Antriebsritzel die größten radial zu diesen gerichteten Kräfte auf die Zahnstange ausgeübt werden, eine entsprechend hohe Steifigkeit zu erzielen, ist es von Vorteil, wenn die Führungsrinne im Bereich des Antriebsritzels mit einer Führungsplatte abgedeckt ist, die sehr viel steifer ist, als die einzelnen die Führungsrinne nur teilweise überdeckenden Führungsleisten. Diese Führungsplatte darf sich naturgemäß höchstens bis dorthin erstrecken, wo sich die Anlenkung der Zahnstange an den Ziehschlitten in der zugeordneten Ausgangs-Endstellung befindet.

Weitere Vorteile und Merkmale der Erfindung ergeben sich aus der Beschreibung eines Ausführungsbeispieles anhand der Zeichnung. In der Zeichnung zeigt

Fig. 1 eine Ziehmaschine in einer Seiten-Längs-Ansicht in stark schematisierter Darstellung,

Fig. 2 eine Draufsicht auf einen Teil der Zeihmaschine gemäß den Sichtpfeilen II—II in Fig. 1,

Fig. 3 einen Vertikal-Querschnitt durch die Ziehmaschine gemäß der Schnittlinie III—III in Fig. 1 in stark vergrößertem Maßstab,

Fig. 4 eine Draufsicht auf einen Teil einer Zahnstange,

Fig. 5 einen Schnitt durch die Zahnstange gemäß der Schnittlinie V—V in Fig. 4 und

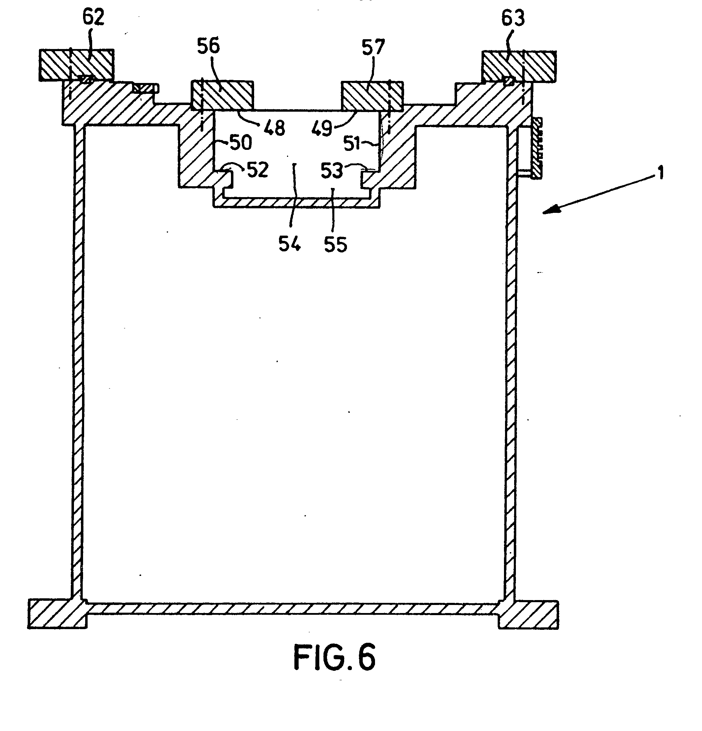

Fig. 6 einen Schnitt durch Fig. 1 gemäß der Schnittlinie VI—VI in Fig. 1.

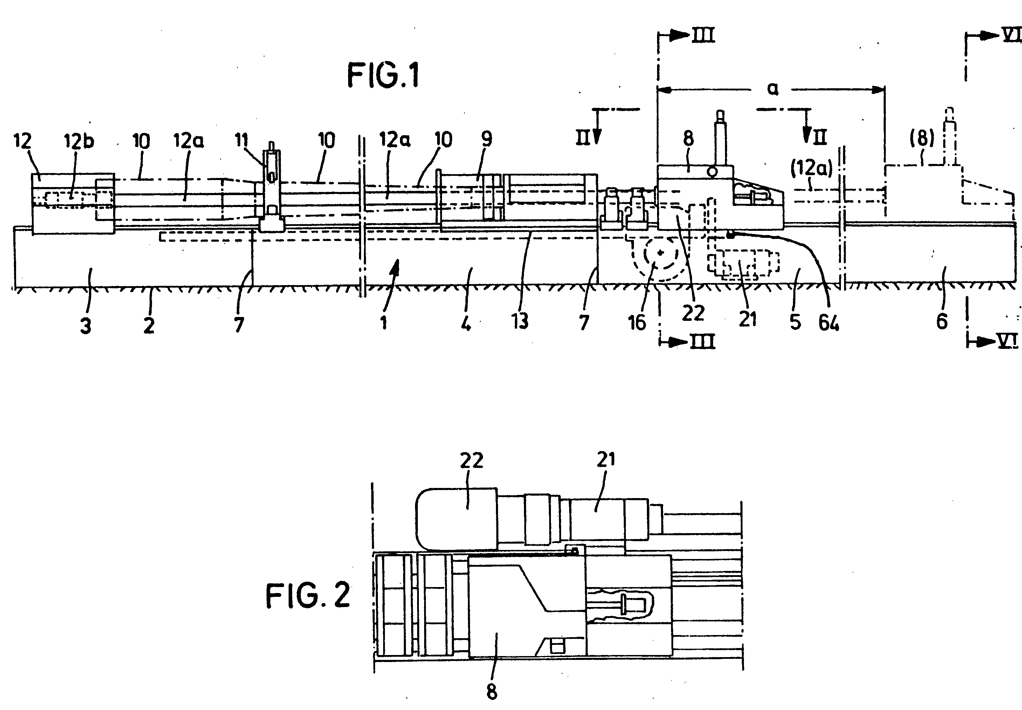

Ein Maschinenbett 1, das auf einem Fundament 2 aufruht, ist — wegen seiner großen Länge — in mehrere, beispielsweise sechs Abschnitte unterteilt, von denen nur vier Abschnitte 3 bis 6 in Fig. 1 angedeutet sind. Diese Abschnitte sind an ihren Stoßstellen 7 jeweils zusammengeflanscht.

Auf dem Maschinenbett ist längsverschiebbar ein Ziehschlitten 8 angeordnet, der von der in Fig. 1 dargestellten Ausgangslage über einen Weg a, von beispielsweise 12 m, bis in die Nähe eines — in Fig. 1 rechten — Endes des Maschinenbettes 1 verschiebbar ist.

Auf dem Maschinenbett 1 ist weiterhin ortsfest ein Spannbock 9 angebracht, der zum Einspannen eines Rohres 10 (Werkstück) dient. Dieser Spannbock 9 befindet sich in der in Fig. 1 dargestellten Ausgangslage des Ziehschlittens 8 in dessen Nähe und zwar auf seiner dem Verschiebeweg des Ziehschlittens 8 abgewandten Seite. Vom Ziehschlitten 8 aus gesehen befinden sich jenseits des Spannbockes 9 auf dem Maschinenbett 1 noch ein oder mehrere Setzstöcke 11, auf dem oder denen das Rohr 10 abgestützt wird. Jenseits des oder der Setzstöcke 11 ist ein Spänefangkasten auf dem Maschinenbett 1 angeordnet, in dem das Rohr 10 endet. Um Anpassungen an unterschiedliche Längen von Rohren 10 vornehmen zu können, sind der oder die Setzstöcke 11 und der Spänefangkasten 12 in üblicher Weise auf dem Maschinenbett 1 längsverschiebbar, aber für eine bestimmte Rohrlänge feststellbar.

Im Ziehschlitten 8 kann eine Ziehstange 12a mit ihrem einen Ende eingespannt werden, an deren anderem Ende sich ein Ziehkopf 12b, also das eigentliche Ziehwerkzeug, befindet. Dieses Ziehwerkzeug wird bei einer Bewegung des Ziehschlittens 8 von der in Fig. 1 dargestellten Ausgangsstellung bis zu der entsprechenden — in Fig. 1 am rechten Ende befindlichen — Endstellung über den Hubweg a durch das Rohr 10 unter Erzeugung von der Form des Ziehwerkzeugs entsprechenden Nuten gezogen. Wenn der Spannbock 9 gleichzeitig als Abteileinrichtung ausgebildet ist, kann das Rohr 10 nach dem Ziehen von ein oder mehreren Nuten um einen vorgegebenen Winkel gedreht werden, so daß eine Vielzahl von Nuten im Rohr hergestellt werden können. Wenn die Ziehstange 12a mit dem Ziehkopf 12b selber während des Ziehvorganges drehbar ist, können Drallnuten im Rohr 10 erzeugt werden. Insoweit sind derartige Ziehmaschinen im Prinzip bekannt.

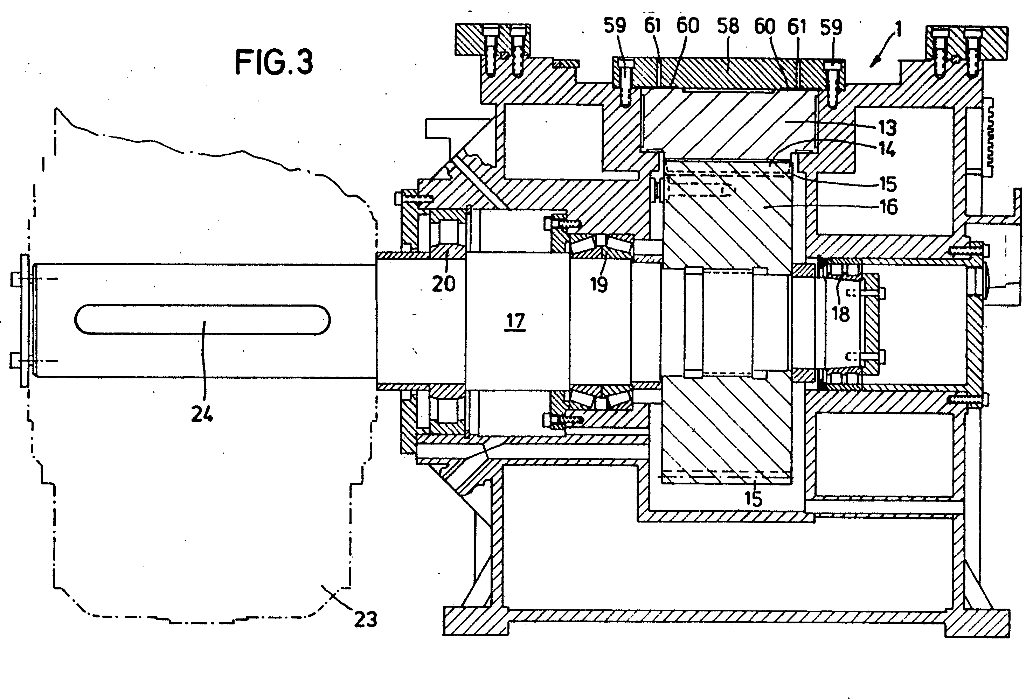

Der Antrieb des Ziehschlittens 8 erfolgt über eine Zahnstange 13, die an ihrer Unterseite mit einer Schrägverzahnung 14 versehen ist. Axiale Verschiebungen der Zahnstange 13 erfolgen über ein ebenfalls mit einer Schrägverzahnung 15 versehenes Antriebsritzel 16, das unterhalb der Zahnstange 13 im Maschinenbett 1 angeordnet und drehfest auf einer Antriebswelle 17 befestigt ist, die mittels Wälzlagern 18, 19, 20 radial spielfrei und axial unverschiebbar aber drehbar im Maschinenbett 1 gelagert ist. Der Antrieb der Antriebswelle 17 und damit des Antriebsritzels 16 und damit wiederum der Zahnstange 13 erfolgt mittels eines an der Außenseite des Maschinenbettes 1 angebrachten Antriebsmotors 21 über ein Schnecken-Stirnrad-Getriebe 22, dessen Stirnrad 23 — wie in Fig. 3 angedeutet — mittels einer Feder-Nutverbindung 24 drehfest auf dem äußeren Ende der Antriebswelle 17 befestigt ist. Das Antriebsritzel 16 ist benachbart zum Spannbock 9 zwischen diesem und dem Ziehschlitten 8 etwa in dessen in Fig. 1 dargestellter benachbarter Endlage angeordnet.

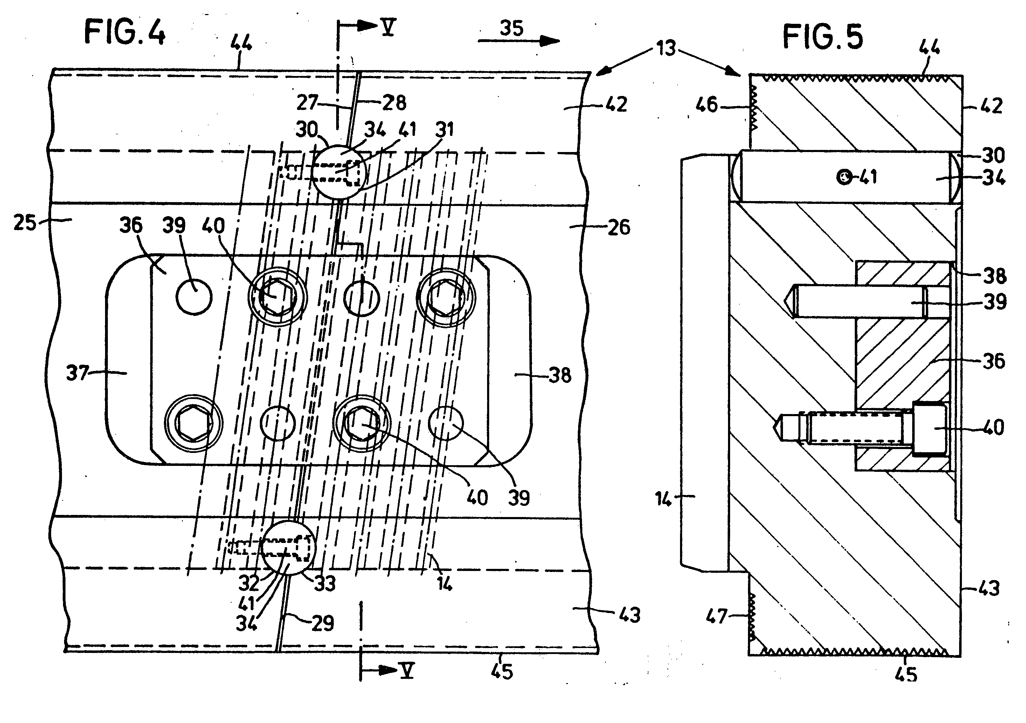

Die Zahnstange 13 besteht aus mehreren Einzelstücken, von denen in Fig. 4 nur zwei Einzelstücke 25, 26 dargestellt sind. Die einander benachbarten Stirnseiten 27, 28 Teilbeiden Einzelstücke 25, 26 verlaufen parallel zu der in Fig. 4 gestrichelt angedeuteten Schrägverzahnung 14. Die beiden Stirnseiten 27, 28 sind mit einem Abstand von höchstens einem zehntel Millimeter, also unter Freilassung einer Trennfuge 29 voneinander angeordnet, die in Fig. 4 stark vergrößert dargestellt ist. In den beiden Einzelstücken 25, 26 sind im Bereich der einander benachbarten Stirnseiten 27, 28 Teilbohrungen 30, 31 und 32, 33 angebracht, die sich jeweils bei unter Freilassung der Trennfuge 29 aneinandergesetzten Einzelstücken 25 und 26 zu vollen zylindrischen Bohrungen ergänzen. In diese sich vertikal erstreckenden Bohrungen sind Zylinderstifte 34 eingesetzt, die die beim Transport des Ziehschlittens 8 aus der in Fig. 1 dargestellten Ausgangslage in die äußere Endlage, also bei einem Ziehvorgang entsprechend dem Richtungspfeil 35 auftretenden Druckkräfte zwischen den Einzelstücken 25, 26 übertragen. Diese Zylinderstifte 34 übertragen darüber hinaus die im Bereich der Trennfuge 29 auftretenden Seitenkräfte, die dadurch bewirkt werden, daß ja die Trennfuge 29 entsprechend dem Verlauf der Schrägverzahnung 14 nicht senkrecht, sondern unter einem Winkel < 90° zur Längsrichtung der Zahnstange 13 und damit ihrer Verschieberichtung 35 verläuft.

Jeweils zwei benachbarte Einzelstücke 25, 26 sind an ihrer Oberseite mit jeweils einer Verbindungslasche 36 verbunden, die in entsprechende, miteinander fluchtende Ausnehmungen 37, 38 in den Einzelstücken 25, 26 eingesetzt sind, wobei die Verbindungslasche zum einen mittels Paßstiften 39 gegenüber jedem Einzelstück 25 bzw. 26 in seiner Lage fixiert und mittels Schrauben 40 befestigt ist. Über diese Verbindungslaschen 36 werden die auf die Zahnstange 13 beim Rücktransport des Ziehschlittens 8 in seine Ausgangslage auftretenden Zugkräfte von einem Einzelstück 25 auf das andere Einzelstück 26 übertragen. Die Zylinderstifte 34 sind gegen ein axiales Herausfallen durch in ein Einzelstück 25 hineingeschraubte Sicherungsschrauben 41 gesichert.

Die Zahnstange 13, d. h. also deren Einzelstücke 25, 26, weist obere Führungsflächen 42, 43, seitliche Führungsflächen 48, 49 bzw. 50, Führungsflächen 46, 47 auf, die gegen entsprechende Führungsflächen 48, 49 bzw. 50, 51 bzw. 52, 53 im Maschinenbett 1 anliegen, so daß die Zahnstange 13 nach oben und unten und seitlich, also quer zur Verschieberichtung 35 der Zahnstange 13 fest im Maschinenbett 1 geführt und abgestützt ist. Durch diese Art der Führung ist sichergestellt, daß die bei einem Ziehvorgang auf die Zahnstange 13 ausgeübten Druckkräfte trotz deren großer Länge, die mindestens dem Hubweg a des Ziehschlittens 8, beispielsweise also 12 m, beträgt, nicht ausknicken kann.

Die unteren und seitlichen Führungsflächen 52, 53 bzw. 50, 51 im Maschinenbett sind in einer entsprechend ausgestalteten Führungsrinne 54 ausgebildet, die nach unten eine zusätzliche Ausnehmung 55 für die Schrägverzahnung 14 aufweist. Letztere ist jeweils an den Unterseiten der Einzelstücke 25, 26 nur zwischen den benachbarten unteren Führungsflächen 46 bzw. 47 ausgebildet und steht gegenüber diesen nach unten vor.

Die oberen Führungsflächen 48, 49 am Maschinenbett 1 sind an den Unterseiten von Führungsleisten 56, 57 ausgebildet, die seitlich teilweise über die Führungsrinne 54 ragend am Maschinenbett 1 festgeschraubt sind. Unmittelbar über dem Antriebsritzel 16 sind die oberen Führungsflächen 48, 49 am Maschinenbett 1 aus Gründen einer höheren Steifigkeit an einer die Führungsrinne 54 vollständig überdeckenden Führungsplatte 58 ausgebildet, die sich — wie aus Fig. 2 hervorgeht — über einen Teil der Länge des Maschinenbetts 1 erstreckt. Die Führungsplatte 58 einerseits und die Führungsleisten 56, 57 andererseits sind mittels Schrauben 59 mit dem Maschinenbett 1 verschraubt.

In den Führungsflächen des Maschinenbetts 1 und/oder in den Führungsflächen der Zahnstange 13 können flache Ausnehmungen 60 angebracht sein, die mit Schmierölanschlüssen 61 in Verbindung stehen, so daß eine gute Schmierung dieser sehr langen geneneinander anliegenden Führungsflächen gewährleistet ist.

Der Ziehschlitten ist auf am Maschinenbett 1 angebrachten Führungen 62, 63 längsverschiebbar aber seitenfest geführt.

Wie in Fig. 1 angedeutet ist, ist das — in Fig. 1 rechte — Ende der Zahnstange 13 mit seiner zugeordneten Stirnseite an einen nach unten in die Führungsrinne 54 hineinragenden Vorsprung 64 angeschraubt, d. h. auch bei der Übertragung der Kräfte bei einem Ziehvorgang auf den Ziehschlitten 8 treten nur Druckkräfte auf.

Ergänzend sei hinzugefügt, daß selbstverständlich die Führungsrinne 54 im Bereich des Antriebsritzels 16 durchbrochen ist, so daß das Antriebsritzel 16 in die Zahnstange 13 eingreifen kann.

## Patentansprüche

1. Ziehmaschine zur Innenbearbeitung von Rohren, mit einem Maschinenbett (1) und einem auf diesem angeordneten, mittels eines Antriebs in Längsrichtung zwischen einer Ausgangsstellung und einer Endstellung verschiebbaren Ziehschlitten (8), der mit einer Zahnstange (13) verbunden ist, in deren Verzahnung ein von einem Antriebsmotor (21) antreibbares Antriebsritzel (16) eingreift, wobei die Zahnstange (13) gegenüber dem Maschinenbett (1) in dessen Längsrichtung (35) verschiebbar und senkrecht dazu allseitig über Führungsflächen (42 bis 53) gelagert ist, und wobei die Führungsflächen des Maschinenbetts (1) sich im wesentlichen über die volle Länge zwischen der Ausgangsstellung und der Endstellung des Ziehschlittens (8) erstrecken, *dadurch gekennzeichnet,* daß die Führungsflächen (42 bis 47) für die Zahnstange (13) an dieser selbst ausgebildet sind, daß die Zahnstange (13) nur im Bereich ihres einen Endes mit dem Ziehschlitten (8) verbunden ist, und daß das Antriebsritzel (16) im Bereich der Ausgangsstellung des Ziehschlittens (8) vor Beginn eines Ziehvorganges angeordnet ist, und daß während des gesamten Ziehvorganges die gesamte treibende Kraft vom Ritzel (16) auf den Ziehschlitten (8) nur durch Druckkräfte innerhalb der Zahnstange übertragen wird.

2. Ziehmaschine nach Patentanspruch 1, *dadurch gekennzeichnet, daß* die Zahnstange (13) aus miteinander verbundenen Einzelstücken (25, 26) besteht, deren einander benachbarte Stirnseiten (27, 28) sich unter Freilassung einer schmalen Trennfuge (29) über Zylinderstifte (34) gegeneinander abstützten, die jeweils in zylindersegmentförmigen Teilbohrungen (30 bis 33) in den Stirnseiten der Einzelstücke angeordnet sind, wobei sich diese Teilbohrungen paarweise zu vollen zylinderförmigen Bohrungen ergänzen.

3. Ziehmaschine nach Patentanspruch 2, *dadurch gekennzeichnet, daß* die Trennfugen (29) parallel zu der Verzahnung der Zahnstange (13) verlaufen.

4. Ziehmaschine nach Patentanspruch 1, *dadurch gekennzeichnet, daß* die Verzahnung der Zahnstange (13) und des Antriebsritzels (16) jeweils als Schrägverzahnung (14 bzw. 15) ausgebildet ist.

5. Ziehmaschine nach Patentanspruch 1, *dadurch gekennzeichnet, daß* die Führungsflächen (48 bis 53) am Maschinenbett (1) in einer zum Ziehschlitten (8) hin offenen Führungsrinne (54) ausgebildet sind, die zwischen den Endstellungen des Ziehschlittens (8) von Führungsleisten (56, 57) teilweise überdeckt wird.

6. Ziehmaschine nach Patentanspruch 5, *dadurch gekennzeichnet, daß* die Führungsrinne (54) im Bereich des Antriebsritzels (16) mit einer Führungsplatte (58) abgedeckt ist.

## Revendications

1. Machine de brochage pour l'usinage intérieur de tubes avec un banc de machine (1) et un chariot de brochage (8) disposé sur celui-ci et déplaçable au moyen d'une commande en direction longitudinale entre deux positions d'extrémité, *caractérisée en ce qu*'une crémaillère (13) est déplaçable dans la direction longitudinale de celle-ci dans le banc de machine (1) et, est montée perpendiculairement à celui-ci par l'intermédiaire des surfaces de guidage (42 à 53), les surfaces de guidage (48 à 53) du banc de machine (1) s'étendant essentiellement sur toute la longueur entre les positions d'extrémité du chariot de brochage (8), en ce que la crémaillère (13) est assemblée dans le domaine de l'une de ses extrémités avec le chariot de brochage (8) et en ce qu'est prévu un pignon d'entraînement (16) en prise avec la denture qui peut être entraîné par un moteur de commande (21) et qui est disposé dans le domaine de la position d'extrémité du chariot de brochage (8) avant le début d'une opération de brochage.

2. Machine de brochage selon la revendication 1, *caractérisée en ce que* la crémaillère (13) est constituée d'éléments individuels (25, 26) assemblés entre eux, dont les faces frontales voisines l'une de l'autre (27, 28) s'appuient l'une contre l'autre, en laissant libre une fente de séparation étroite (29), par l'intermédiaire de tiges cylindriques (34) qui sont respectivement disposées dans de perçages partiels (30 à 33) en forme de segments cylindriques ménagés dans les faces frontales de sorte que ces perçages élémentaires se complétant par paires en perçages cylindriques complets.

3. Machine de brochage selon la revendication 2, *caractérisée en ce que* les fentes de séparation (29) s'étendent parallélement à la denture de la crémaillère (13).

4. Machine de brochage selon la revendication 1, *caractérisée en ce que* la denture de la crémaillère (13) et du pignon d'entraînement (16) est réalisée sous forme de denture oblique (14 ou 15).

5. Machine de brochage selon la revendication 1, *caractérisée en ce que* les surfaces de guidage (48 à 53) prévues sur le banc de machine (1) sont réalisées dans un canal de guidage (54) ouvert en direction du chariot de brochage (8), canal qui est partiellement recouvert entre les positions d'extrémité du chariot de brochage (8) par des barres de guidage (56, 57).

6. Machine de brochage selon la revendication 5, *caractérisée en ce que* le canal de guidage (54) est recouvert dans le domaine du pignon d'entraînement (16) par une plaque de guidage (58).

### Claims

1. Drawing machine for the internal machining of tubes, with a machine bed (1) and a drawing carriage (8) displaceable in a longitudinal direction between two extreme positions by means of a drive, characterised in that a rack (13) is mounted in the machine bed (1) to be displaceable in the longitudinal direction thereof and at a right-angle thereto via guide faces (42 to 53), whereby the guide faces (48 to 53) of the machine bed (1) extend substantially over the complete length between the extreme positions of the drawing carriage (8) and in that in the region of its end the rack (13) is connected to the drawing carriage (8) and in that a drive pinion (16) engaging the teeth and adapted to be driven by a drive motor (21) is provided, which is located in the region of the end position of the drawing carriage (8) prior to commencement of a drawing operation.

2. A drawing machine according to Patent Claim 1, characterised in that the rack (13) consists of interconnected individual pieces (25, 26) of which the adjacently disposed end faces (27, 28) are braced on one another and while leaving a small joint (29) clear, through cylindrical pins (34) disposed in each case in partial bores (30 to 33) which take the form of segments of a cylinder and which are disposed in the end faces of the individual parts, these partial bores supplementing one another in pairs to form complete cylindrical bores.

3. A drawing machine according to Patent Claim 2, characterised in that the joints (29) extend parallel with the teeth of the rack (13).

4. A drawing machine according to Patent Claim 1, characterised in that the teeth of the rack (13) and of the drive pinion (16) are constructed in each case as helical teeth (14, 15).

5. A drawing machine according to Patent Claim 1, characterised in that the guide faces (48 to 53) on the machine bed (1) are constructed in a guide channel (54) open towards the drawing carriage (8) and, between the end positions of the drawing carriage (8), partly covered by guide strips (56, 57).

6. A drawing machine according to Patent Claim 5, characterised in that the guide channel (54) is, in the region of the drive pinion (16), covered by a guide plate (58).

# FIG.1

# FIG.2

# FIG.3

59  61  60  58  60  61  59  1

13
14
15
16

20  19

17

18

24

23

2

0001073

FIG.4

FIG.5

0 001 073

FIG.6